# EUROPEAN PATENT SPECIFICATION

(11) **EP 4 131 770 B1**
(45) Date of publication and mention of the grant of the patent: **12.08.2026**
(21) Application number: 20927876.1
(22) Date of filing: 15.12.2020
(51) Int. Cl.: H02P 21/22, H02P 21/14

(54) **MOTOR CONTROL DEVICE AND METHOD**
VORRICHTUNG UND VERFAHREN ZUR MOTORSTEUERUNG
DISPOSITIF ET PROCÉDÉ DE COMMANDE DE MOTEUR

(30) Priority: 26.03.2020 JP 2020056064
(43) Date of publication of application: 08.02.2023
(73) Proprietor: Nidec Corporation, Minami-ku, Kyoto-shi, Kyoto 601-8205 (JP)
(72) Inventor: TAKANO, Yuichi, Kyoto-shi, Kyoto 601-8205 (JP); FUKUMURA, Tomohiro, Kyoto-shi, Kyoto 601-8205 (JP); OTSU, Yuma, Kyoto-shi, Kyoto 601-8205 (JP)
(74) Representative: SSM Sandmair
(86) International application number: PCT/JP2020/046786
(87) International publication number: WO 2021/192450

(56) References cited:
- JP-A- 2003 153 600
- JP-A- 2012 055 032
- JP-A- 2014 195 353
- JP-A- 2015 128 355
- JP-A- 2015 128 355
- JP-A- 2016 226 270
- US-A1- 2017 282 751
- SUNG-YOON JUNG ET AL: "Current Minimizing Torque Control of the IPMSM Using Ferrari s Method", IEEE TRANSACTIONS ON POWER ELECTRONICS, INSTITUTE OF ELECTRICAL AND ELECTRONICS ENGINEERS, USA, vol. 28, no. 12, 1 December 2013 (2013-12-01), pages 5603 - 5617, XP011514331, ISSN: 0885-8993, DOI: 10.1109/TPEL.2013.2245920

## Description

### TECHNICAL FIELD

The present invention relates to a motor control device that controls driving of an electric motor.

### BACKGROUND ART

Since a motor that uses a reluctance torque such as an internal permanent magnet (IPM) motor can perform a high-torque operation and a high-speed operation, the motor is a drive source for electric vehicles, hybrid vehicles, and the like as a traction motor. While the control of the traction motor is complicated by such an IPM, it is necessary to operate the motor to a voltage and current limit in order to obtain maximum efficiency.

In the related art, various methods have been proposed for the maximum efficiency control of the motor. For example, Non Patent Literature 1 discloses a control algorithm using a maximum torque and current control (MTPA) curve and a maximum torque and magnetic flux control (MTPF) curve.

Patent Literature 1 discloses a control for setting an operation mode to a maximum torque and current (MTPA) operation, a weak magnetization (CLVL) operation, and a maximum torque and voltage (MTPV) operation in order from a low speed region to a high speed region based on a current command obtained from an intersection point of curves on an xy plane calculated by a numerical analysis method.

US 2017/282751 A1 discloses a vehicle including an electric power storage, an electric power generator, a rotating electric machine, and circuitry (cf. abstract). This document further discloses that the rotating electric machine is driven with electric power stored in the electric power storage and/or generated by the electric power generator to move the vehicle, and that the circuitry is configured to calculate target driving force for rotating electric machine, to detect surplus electric power which is generated due to a response delay of the electric power generator upon decreasing an amount of electric power generated by the electric power generator when the target driving force decreases, and to drive the rotating electric machine, when detecting the surplus electric power, with a phase current different from a maximum efficiency phase current with which an electric current value or electric power loss of the rotating electric machine is smallest so that the rotating electric machine consumes the surplus electric power (cf. abstract).

### CITATIONS LISTS

### PATENT LITERATURE

Patent Literature 1: JP 2016-226270 A

### NON-PATENT LITERATURE

Non Patent Literature 1: "Reluctance Torque Application Motor" (The Institute of Electrical Engineers of Japan/Ohmsha (2016/1))

### SUMMARY OF INVENTION

### TECHNICAL PROBLEMS

In motor control, in order to apply the control method to an actual product, it is necessary to enable a stable operation for all cases of voltage and current limits. However, both Patent Literature 1 and Non Patent Literature 1 merely describe a part of cases where the voltage and current limits may occur.

For example, the motor current command needs to (condition i) satisfy the voltage and current limit to avoid a control failure, (condition ii) satisfy the command torque to satisfy a higher-order command, and finally (condition iii) satisfy a condition for maximizing the motor efficiency.

Non Patent Literature 1 describes the maximum efficiency control, but does not cover all cases in that the maximum efficiency control cannot be implemented since there is no description by mathematical equations. Non Patent Literature 1 proposes an optimum current table method, but there is a problem that generation of a table for a current command value is costly.

Patent Literature 1 does not describe efficiency maximization, and does not consider, for example, a case where there is no intersection point between a voltage limited ellipse and a current limited circle, and does not cover all voltage and current limit conditions (does not cover a case where both the voltage limit and the current limit are not satisfied). Since an intersection point to be selected is determined based only on a reference rotor speed, there may be a case where a solution of the numerical analysis method (two-dimensional Newton method) is lost due to fluctuation in a torque command or a voltage and current limit value, and a current output becomes unstable.

The present invention has been made in view of the above-described problems, and an object of the present invention is to generate an optimum motor current command for all voltage and current limit conditions including a case where the voltage and current limit condition is not satisfied.

### SOLUTIONS TO PROBLEMS

The following configuration is provided as means for achieving the above object and solving the above-described problems. That is, an illustrative first invention of the present application is a motor control device that drives a motor by a current vector control in a dq-axis orthogonal coordinate system. The device includes means for obtaining combinations of intersection points effective as current commands among intersection points of two curves selected from a maximum efficiency curve, a current minimum curve, a voltage minimum curve, a current limited circle, a voltage limited ellipse, and a constant torque curve in a dq-axis orthogonal coordinate plane, means for arraying the combinations of the intersection points as current states and transition destination states in a row direction and a column direction, respectively, and creating a state transition table in which transition conditions from the current states to the transition destination states are set, and means for generating a current command value for the motor based on a positional relationship between intersection points on the curves corresponding to the transition destination state when a transition from any intersection point corresponding to the current state is performed according to the transition condition.

An illustrative second invention of the present application is a motor control method for driving a motor by a current vector control in a dq axis orthogonal coordinate system. The method includes obtaining combinations of intersection points effective as current commands among intersection points of two curves selected from a maximum efficiency curve, a current minimum curve, a voltage minimum curve, a current limited circle, a voltage limited ellipse, and a constant torque curve in a dq-axis orthogonal coordinate plane, arraying the combinations of the intersection points as current states and transition destination states in a row direction and a column direction, respectively, and creating a state transition table in which transition conditions from the current states to the transition destination states are set, and generating a current command value for the motor based on a positional relationship between intersection points on the curves corresponding to the transition destination state when a transition from any intersection point corresponding to the current state is performed according to the transition condition.

### ADVANTAGEOUS EFFECTS OF INVENTION

According to the motor control device of the present invention, it is possible to output a stable motor control current command in all cases including a case where there are no intersection points effective as the current commands based on two curves selected from the plurality of curves by using the state transition table.

### BRIEF DESCRIPTION OF DRAWINGS

FIG. 1 is a block diagram illustrating an overall configuration of a motor control device according to an embodiment of the present invention.
FIG. 2 is a diagram illustrating a positional relationship between a plurality of curves on a dq-axis orthogonal coordinate plane.
FIG. 3 is a diagram for describing a selection range of a current command value by the plurality of curves.
FIG. 4 is a diagram illustrating various cases for a current commandable range by a voltage and current limit.
FIG. 5 is a diagram illustrating combinations effective as current commands.
FIG. 6 is a state transition table in which transition conditions from current states to transition destination states are set.
FIG. 7 is a flowchart illustrating calculation processing of a command current in the motor control device according to the present embodiment.
FIG. 8 is a diagram illustrating a modification of a combination effective as a current command.
FIG. 9 is a state transition table corresponding to the combination of FIG. 8.
FIG. 10 is a flowchart illustrating a selection example of a current output intersection point not using the state transition table.
FIG. 11 is a block diagram illustrating a configuration of a motor control device according to a modification.

### DESCRIPTION OF EMBODIMENT

An embodiment according to the present invention will be described in detail below with reference to the accompanying drawings.

### <Configuration of motor control device>

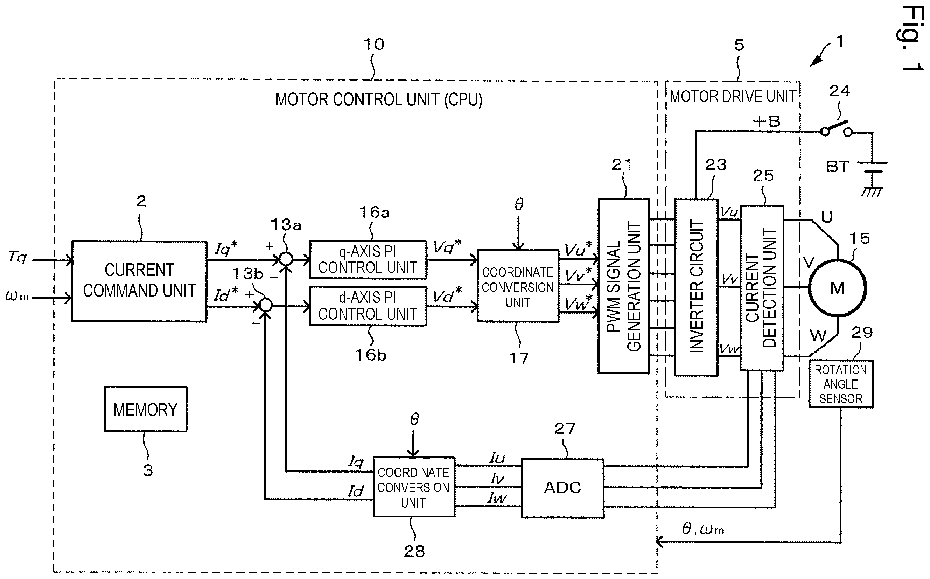

FIG. 1 is a block diagram illustrating an overall configuration of a motor control device according to the embodiment of the present invention.

A motor control device 1 illustrated in FIG. 1 includes a motor control unit 10, a motor drive unit 5 that supplies a predetermined drive current to an electric motor 15 to be controlled, and the like. The motor control unit 10 includes, for example, a microprocessor that controls the entire motor control device 1, and is a central control unit (CPU) that performs feedback control (F/B control) or the like of feeding back a current value such that a current flowing through the electric motor 15 matches a target current.

A current command unit 2 generates a d-axis current command value Id* and a q-axis current command value Iq*, which are two-phase command current values (target current values) having a d-axis component and a q-axis component, from a command torque (torque command value) Tq, a rotational speed ω of the electric motor 15, and the like by using a state transition table to be described later.

In addition to a motor control program executed by the motor control unit 10, a memory 3 stores a state transition table, a program, and the like necessary for implementing a state transition to be described later. The memory 3 is, for example, a read-only memory (ROM). The memory 3 may be incorporated in the motor control unit 10 or may be externally attached.

A subtractor 13a calculates a difference between the q-axis current command value Iq* and a q-axis current Iq output from a coordinate conversion unit 28. A subtractor 13b calculates a difference between the d-axis current command value Id* and a d-axis current Id output from the coordinate conversion unit 28.

A q-axis PI control unit 16a calculates a q-axis voltage command value Vq* that is a command value of a q-axis voltage by performing proportional integral (PI) control so as to converge the difference between Iq* and Iq to 0. A d-axis PI control unit 16b calculates a d-axis voltage command value Vd* that is a command value of a d-axis voltage by performing proportional integral (PI) control so as to converge the difference between Id* and Id to 0.

A coordinate conversion unit 17 calculates voltages applied to the motor from the q-axis and d-axis voltage command values Vq* and Vd* and a rotation angle of the electric motor 15. That is, the coordinate conversion unit 17 having two-phase and three-phase conversion functions converts the q-axis voltage command value Vq* and the d-axis voltage command value Vd* into voltage command values Vu*, Vv*, and Vw* which are voltage command values of phases of three phases based on the rotation angle θ.

The voltage command values Vu*, Vv*, and Vw* after the three-phase conversion are input to a PWM signal generation unit 21. The PWM signal generation unit 21 generates a drive signal of the electric motor 15 by increasing or decreasing a duty of a pulse width modulation (PWM) control signal based on these voltage command values.

That is, the PWM signal generation unit 21 generates ON/OFF control signals (PWM signals) of a plurality of semiconductor switching elements (FETs) constituting an inverter circuit 23 according to the voltage command values. The semiconductor switching elements correspond to phases (u phase, v phase, and w phase) of the electric motor 15.

The switching element (FET) is also called a power element. Examples of the switching element to be used include a metal-oxide semiconductor field-effect transistor (MOSFET), an insulated gate bipolar transistor (IGBT), and the like.

The PWM signal generation unit 21 may be incorporated in a motor control integrated circuit (pre-drive unit IC) that generates a motor drive signal and functions as an FET drive circuit or the like.

The inverter circuit 23 of the motor drive unit 5 is a motor drive circuit that generates an alternating current for driving the electric motor 15 from a power supplied from a battery BT through a power supply relay 24. The electric motor 15 is, for example, an in-vehicle traction motor such as a surface permanent magnet motor (SPM) or an internal permanent magnet motor (IPM). The power supply relay 24 is configured to be able to cut off the power supplied from the battery BT, and further can be a semiconductor relay.

A motor drive current supplied to the electric motor 15 from the inverter circuit 23 is detected by a current detection unit 25 including current sensors disposed to correspond to the phases. For example, the current detection unit 25 detects a direct current flowing through a shunt resistor for motor drive current detection by using an amplifier circuit including an operational amplifier and the like.

Output signals (current detection signals) from the current detection unit 25 are input to an analog-to-digital conversion unit (ADC) 27. Here, the ADC 27 converts analog current values into digital values by an A/D conversion function of the ADC 27, and three-phase currents Iu, Iv, and Iw obtained by this conversion are input to the coordinate conversion unit 28.

The coordinate conversion unit 28 having three-phase and two-phase conversion functions outputs the q-axis current Iq and the d-axis current Id from the rotation angle θ detected by a rotation angle sensor 29 and the three-phase currents Iu, Iv, and Iw. That is, the coordinate conversion unit 28 calculates the d-axis current and the q-axis current based on actual currents (q-axis actual current and d-axis actual current) of the motor.

### <Optimal efficiency control>

Since the motor control device according to the present embodiment needs to satisfy a command torque and a speed and maximize efficiency in the motor control, voltage and current limits are to be satisfied as a first condition, and efficiency is to be maximized within a voltage and current limit range as a second condition.

Thus, four curves of a current minimum curve, a voltage minimum curve, a current limited circle, and a voltage limited ellipse are defined on a current dq-axis plane (dq-axis orthogonal coordinate plane) in which an x axis is an Iq component, a y axis is an Id component, and a y-axis positive direction is a weak field direction. A region surrounded by these four curves satisfies the first condition. In order to further satisfy the second condition, a point overlapping or closest to a constant torque curve and a maximum efficiency curve in the above region is output as the current command value.

The constant torque curve (CT curve or simply referred to as constant torque (CT)) is a locus of orthogonal coordinates (x, y) satisfying the constant torque T, and can be expressed by Equation (1). In Equation (1), ξₘ is a permanent magnet coefficient, and is 1 for a motor including a permanent magnet and 0 for a motor not including a permanent magnet. Δη is a difference between a maximum value ηₘₐₓ and a minimum value ηₘᵢₙ of a dimensionless motor constant η.
[Math. 1] $2 x \frac{{ξ}_{m} + Δ η y}{2 {ξ}_{m} + Δ η} = T$

The constant torque curve is a hyperbola, but in any case of a case where the torque command value is T > 0 and a case where the torque command value is T < 0, a meaningful current command is obtained in a range of y ≥ 0.

The locus of (x, y) for setting a current norm |i₁| to be constant is i₁² = x² + y², and a current limit function is LA(x, y) = x² + y². When a current norm upper limit is set to |iₘₐₓ|, the current limited circle is a circle having a radius |iₘₐₓ| with an origin as a center. Thus, a curve represented by Equation (2) is referred to as the current limited circle or a limited ampere (LA) curve.
[Math. 2] ${x}^{2} + {y}^{2} = {{i}_{max}}^{2}$

The locus of (x, y) for setting a voltage norm |v₁| to be constant is expressed by LV(x, y) = (x - ηₘᵢₙωy + ξm)² + (y + ηₘₐₓωy)² as a voltage limit function. When an upper limit of the voltage norm is set to |vₘₐₓ|, a voltage limited circle (limited voltage (LV) curve) can be expressed by Equation (3).
[Math. 3] ${\left(x-{η}_{min}ωy+{ξ}_{m}ω\right)}^{2} + {\left(y+{η}_{max}ωx\right)}^{2} = {{v}_{max}}^{2}$

A current norm minimization condition is derived for the constant torque, and thus, a current norm minimum curve (current minimum curve or also referred to as minimum ampere (MA) curve) represented in Equation (4) is defined.
[Math. 4] $\left({ξ}_{m}+Δηy\right) y - Δ η {x}^{2} = 0$

Similarly, a voltage norm minimization condition is derived for the constant torque, and thus, a voltage norm minimum curve (voltage minimum curve or also referred to as a minimum voltage (MV) curve) represented in Equation (5) is defined.
[Math. 5] $\begin{matrix}- \left\{Δηx+\left({ξ}_{m}+Δηy\right){η}_{min}ω\right\} \left(x-{η}_{min}ωy+{ξ}_{m}ω\right) \\ + \left\{\left({ξ}_{m}+Δηy\right)-Δ{ηη}_{max}ωx\right\} \left(y+{η}_{max}ωx\right) = 0\end{matrix}$

The maximum efficiency curve (also referred to as a maximum efficiency (ME) curve) is defined as follows, for example, by deriving a hysteresis loss coefficient and an eddy current loss coefficient based on analysis or actual measurement data and using an equation including the hysteresis loss coefficient and the eddy current loss coefficient.
[Math. 6] $\left({ξ}_{m}+Δηy\right) y - Δ η {x}^{2} + {K}^{2} \left(ω\right) \left\{-{{η}_{max}}^{2}Δη{x}^{2}+{η}_{min}\left({ξ}_{m}+Δηy\right)\left({η}_{min}y-{ξ}_{m}\right)\right\} = 0$

In Equation (6), K(ω) is a current independent coefficient, and can be defined as follows when the hysteresis loss coefficient is kₕ and the eddy current loss coefficient is kₑ.
[Math. 7] $K \left(ω\right) = \sqrt{ω \left({k}_{h}+{k}_{e}ω\right)}$

The minimum current curve, the minimum voltage curve, and the maximum efficiency curve are upward hyperbolas with a y-axis as a main axis. The maximum efficiency curve is a quadratic curve described by using an iron loss of the motor.

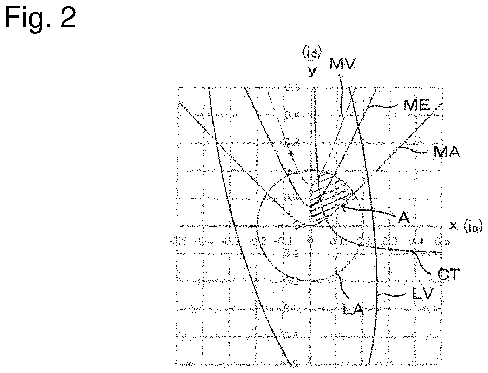

FIG. 2 illustrates a positional relationship between five curves (MV curve, ME curve, MA curve, LA curve, and LV curve) among the above-described curves on a dq-axis orthogonal coordinate plane. In FIG. 2, a horizontal axis is an iq axis (x axis) and a vertical axis is an id axis (y axis), and a magnitude relationship of each curve (a value of a y coordinate with respect to the same x coordinate) satisfies a relationship of MV curve > ME curve > MA curve.

In a range of y > 0, the MA, MV, and ME curves do not intersect each other. On the other hand, the MA curve intersects the LA curve, and the MV curve intersects the LV curve.

Next, a method for selecting the current command value in the motor control device according to the present embodiment will be described. In FIG. 2, the inside of MA, MV, LA, and LV is a region (indicated by reference sign A) that satisfies a voltage and current limit, and the command torque is satisfied on a line of the CT curve. Here, although there are a plurality of points satisfying these conditions, the command torque and the maximum efficiency are compatible at an intersection point of the ME curve and the CT curve, and the motor efficiency can be maximized by selecting this point as the current command value. Accordingly, it is essential to satisfy the voltage and current limit in the selection of the current command value.

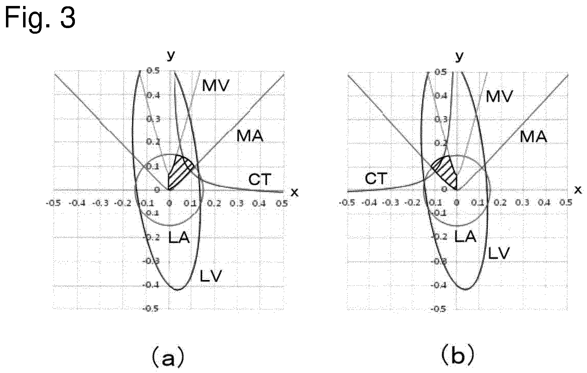

A selection range of the current command value will be described with reference to FIG. 3. (a) of FIG. 3 corresponds to a case where the torque command value is T > 0, (b) of FIG. 3 corresponds to a case where the torque command value is T < 0, and the plurality of the above-described quadratic curves are limit conditions of the current command values.

As illustrated in FIG. 3, a range sandwiched between the MV curve and the MA curve which are two parabolas is an operating point effective as a current output, and an opening of the range is limited by the LA curve and the LV curve. Accordingly, a hatched region in FIG. 3 surrounded by these curves is a current command outputtable range, and is a range in which all four conditions of inside LV curve, inside the LA curve, over the MA curve, and below the MV curve are satisfied.

The command torque can be output when the CT curve based on the command torque is included within the above range. When the torque command is large and does not include the CT curve, a point at which the torque is maximized within a voltage and current limit range is selected as the current command value. When the CT curve is included, an intersection point with the ME curve that is optimal in efficiency or a point closest to the ME curve is selected as the current command value.

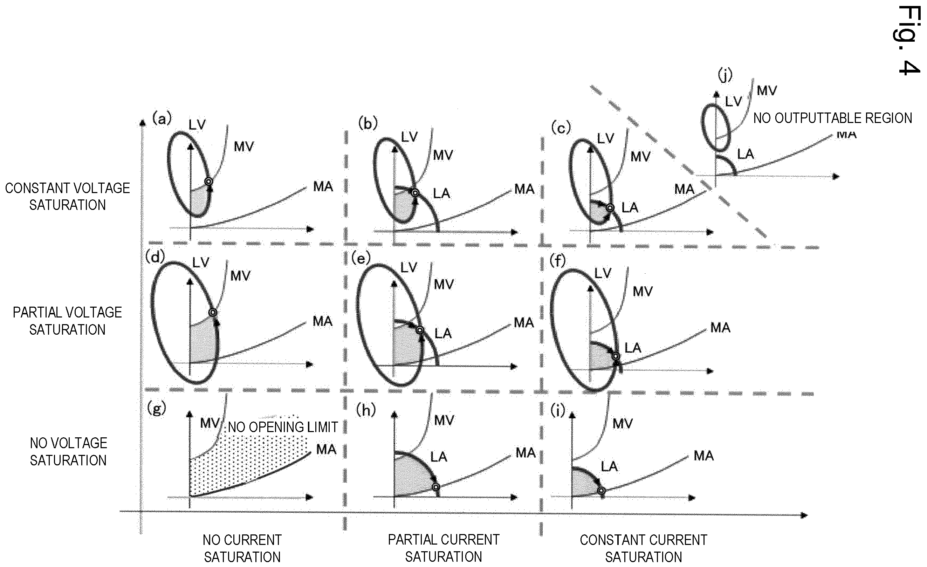

As illustrated in FIG. 4, as current commandable ranges by the voltage and current limit, there are a total of nine ranges including three ranges (constant voltage saturation, partial voltage saturation, and no voltage saturation) in a voltage saturation stage and three ranges (constant current saturation, partial current saturation, and no current saturation) in a current saturation stage.

However, since there is no motor in which both a voltage and a current are unlimited, a case of no voltage saturation and a case of no current saturation ((g) of FIG. 4) are excluded. A case where there is no outputtable range ((j) of FIG. 4) is defined as no cross voltage and ampere (NOVA). In each case of FIG. 4, a torque increasing direction is indicated by an arrow, and a torque maximum point is indicated by a double circle (⊚).

Here, the intersection point of the curves is called a combination of abbreviations of the intersecting curves. Specifically, an intersection point of the maximum efficiency curve and the constant torque curve is referred to as MECT, an intersection point of the current limited circle and the constant torque curve is referred to as LACT, an intersection point of the current minimum curve and the current limited circle is referred to as MALA, an intersection point of the voltage limited ellipse and the constant torque curve is referred to as LVCT, an intersection point of the voltage minimum curve and the voltage limited ellipse is referred to as MVLV, and an intersection point of the voltage limited ellipse and the current limited circle is referred to as LVLA.

As illustrated in FIG. 4, in the case of only the voltage limit, MVLV becomes the torque maximum point ((a) and (d) of FIG. 4). In the case of only the current limit, MALA becomes the torque maximum point ((h) and (i) of FIG. 4). In a case where there are both the voltage and current limits, LVLA becomes the torque maximum point ((b), (c), (e), and (f) of FIG. 4).

When the CT curve does not overlap a current output range, the torque maximum point is set as the current command value. When the CT curve overlaps the current output range, a point that is within the current output range and is closest to the ME curve on the CT curve is set as the current command value.

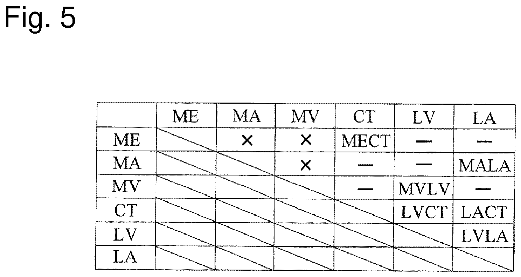

Next, a method for narrowing down the current command value in the motor control device according to the present embodiment will be described. The current command value is an intersection point of two curves selected from six curves expressed by the above-described Equations (1) to (6), and there are 15 combinations for selecting two curves from these six curves. Combinations effective as the current command are limited to six combinations of MECT, LVCT, LACT, MVLV, MALA, and LVLA as illustrated in FIG. 5.

This is because there is no intersection point among MA, MV, and ME as described above and MALV, MVLA, MELV, MELA, MACT, and MVCT do not become an effective current output. LACT, LVCT, and LVLA may have no intersection point.

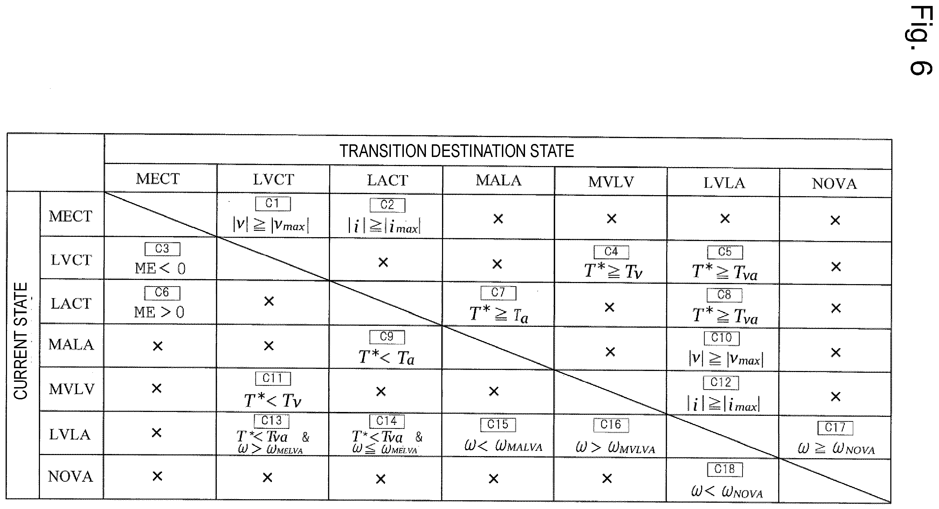

Accordingly, all cases can be covered by seven cases including a case where there is no intersection point effective as the current command. Thus, the motor control device according to the present embodiment regards these seven cases as states, and selects the current command value by using the state transition table illustrated in FIG. 6.

In the state transition table of FIG. 6, combinations of intersection points effective as the current commands are arrayed as current states and transition destination states in a row direction and a column direction, respectively, and transition conditions (C1 to C18) from the current states to the transition destination states are set. The transition condition is a determination condition for moving from any intersection point to another intersection point, and since the determination condition depends on a current intersection point, the transition condition becomes a state transition machine. A x mark indicates that there is no transition.

In the state transition table of FIG. 6, MALA, MVLV, LVLA, and NOVA are states in which the torque is saturated. Here, the torques of MVLV, MALA, and LVLA are defined as a voltage saturation torque Tv, a current saturation torque Ta, and a voltage current saturation torque Tva, respectively.

These torques do not depend on the current states, but vary depending on parameters such as a speed and a current limit value. Three states of MECT, LVCT, and LACT can follow the torque command, and only MECT has the maximum efficiency among these states. |v|, |i|, and ME represent the voltage norm, the current norm, and the ME function output in the current state, respectively.

The transition between the states where the torque is saturated (MALA, MVLV, LVLA, and NOVA) is determined by a relationship between the current limit, the voltage limit, and the speed. In the transition in which the torque saturation ↔ unsaturation changes (LVCT, LACT ↔ MALA, MVLV, LVLA), when the torque of Tv or Ta becomes unsaturated, there is one transition destination.

On the other hand, when Tva becomes unsaturated, two transition destinations of LVCT and LACT are considered. Which one of the two transition destinations is determined by a shared point speed ω_{MELVA} between the ME curve, the LV curve, and the LA curve.

When there is no intersection point effective as the current command, protection means for applying at least one or both of overcurrent protection and overvoltage protection to the motor may be further included. By doing this, the motor can be protected from overheating when there is no outputtable range, and destruction, failure, and the like of a control element can be prevented.

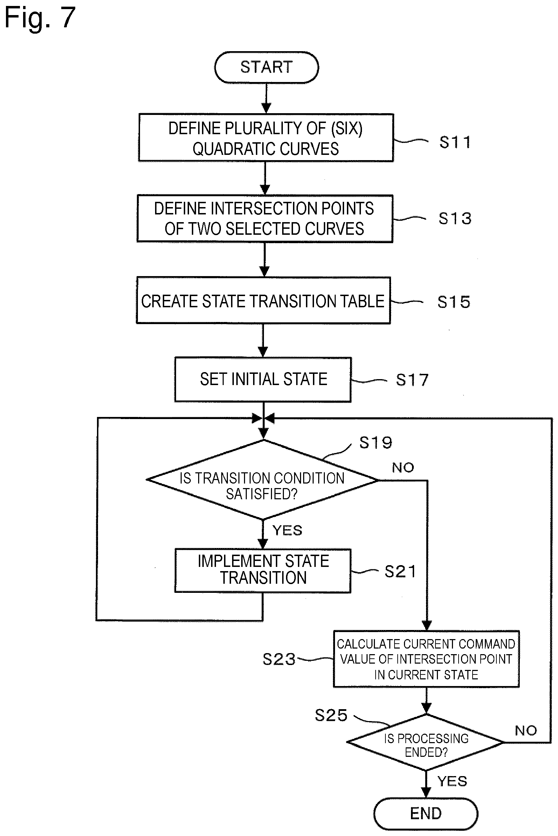

Next, an output operation of the current command in the motor control device according to the present embodiment will be described. FIG. 7 is a flowchart illustrating calculation processing of the current command value in the motor control device according to the present embodiment.

In step S11 of FIG. 7, the motor control unit 10 defines the above-described six quadratic curves on the dq-axis orthogonal coordinate plane. Specifically, the MV curve, the ME curve, the MA curve, the LA curve, the LV curve, and the CT curve are drawn on an xy plane. In subsequent step S13, an intersection point of two curves selected from the six curves drawn in step S11 is defined. As described above, there are a total of seven combinations of the six intersection points effective as the current commands and a combination having no effective intersection point as the current command.

In step S15, the state transition table illustrated in FIG. 6 is created in which the combinations of the intersection points effective as the current commands obtained in step S13 are arrayed as the current states and the transition destination states in the row direction and the column direction, respectively, and the transition condition is added thereto.

The motor control unit 10 sets an initial state (for example, starting with MECT) in step S17, and determines whether or not a transition condition to be described later is satisfied in step S19. When the transition condition is satisfied, in step S21, a state transition of moving from a predetermined intersection point to another intersection point is implemented by using the command torque, the motor rotational speed, and the like as the transition condition according to the state transition table created in the above step S15. As a result, the transfer destination (transition destination) is narrowed down, and the point at which the torque is maximized within the voltage and current limit range is selected as the current command. When there are a plurality of outputtable current commands, the command torque is satisfied and output with maximum efficiency.

As described above, as long as an initial value (x, y) satisfies the transition condition, processing of implementing another state transition is repeated (steps S19 and S21). When the transition condition is not satisfied (NO in step S19), the motor control unit 10 calculates a current command value at the intersection point of the current state in step S23. Here, the current command values (q-axis current command value Iq* and d-axis current command value Id*) satisfying a condition for maximizing efficiency are satisfied by using, for example, a two-variable Newton method, an algebraic solution method, or the like. The current command value at each intersection point can be derived by selecting two curves and solving a quadratic equation with two unknowns.

In step S25, it is determined whether or not state transition processing is ended. The processing returns to step S19 when the state transition processing is not ended, and the state transition processing based on another transition condition is implemented.

Next, a verification result of optimal efficiency control in which the state transition based on the state transition table is implemented in the motor control device according to the present embodiment will be described.

In the implementation of the state transition using the state transition table, there are three patterns of MALA, MVLV, and LVLA as termination points, and here, a control scenario in each pattern is verified in both directions of a torque increasing direction and a torque decreasing direction. A case where the termination point changes between MALA ↔ LVLA ↔ MVLV is also verified.

In the following description, although all command torques are assumed to be "positive", the same applies even though the command torque is "negative".

### <Example 1 of state transition >

Here, as Example 1 of the state transition, a case where the termination point is MALA is verified. For example, in a direction in which the torque increases from 0, the torque advances on the ME curve while satisfying the command torque and the optimal efficiency (MECT). The curve intersects the LA curve and the current is saturated (|i| ≥ |iₘₐₓ|: transition condition C2 in FIG. 6). Subsequently, the torque advances on the LA curve while satisfying the command torque (LACT).

The torque is saturated (T* ≥ Ta: transition condition C7) and is terminated at a point MALA intersecting the MA curve. The torque maximum point is MALA, but the torque does not satisfy the command torque at MALA. The transition condition C7 is a condition in which the orthogonal coordinates (x, y) of LACT are substituted into MA to be equal to or less than 0 (that is, MA < 0).

Thus, when the torque saturation is eliminated in a direction in which the torque decreases from MALA (T* < Ta: transition condition C9), the torque advances on the LA curve while satisfying the command torque (LACT). The curve intersects the ME curve (ME > 0: transition condition C6), and advances on the ME curve. Thus, the optimal efficiency control is implemented (MECT). The transition condition C9 is a condition in which the orthogonal coordinates (x, y) of LACT are substituted into MA to be equal to or greater than 0 (that is, MA > 0).

### <Example 2 of state transition>

When the termination point is MVLV, scenarios are different between the voltage partial saturation and the voltage constant saturation. When the voltage is constantly saturated, the following plurality of relationships are conceivable as a relationship between the ME curve and the LV curve.

Scenario A: Y intercept satisfies ME > LV
Scenario B: Y intercept satisfies LV ≥ ME, and number of intersection points of LV curve and ME curve is two.
Scenario C: Y intercept satisfies LV ≥ ME, and number of intersection points of LV curve and ME curve is 0 to 1.

The case of the partial current saturation corresponds to only the above scenario A.

### [Scenario A]

In the direction in which the torque increases from 0, the torque advances on the ME curve while satisfying the command torque and the optimal efficiency (MECT). The curve intersects the LV curve and the voltage is saturated (|v| ≥ |vₘₐₓ|: transition condition C1). Subsequently, the torque advances on the LV curve while satisfying the command torque (LVCT). When the torque is saturated (T* ≥ Tᵥ: transition condition C4), the torque is terminated at a point MVLV intersecting the MV curve. The torque maximum point is MVLV, and the torque does not satisfy the command torque at MVLV. Specifically, the transition condition C4 is a condition in which the orthogonal coordinates (x, y) of LVCT are substituted into MV to be equal to or greater than 0 (that is, MV > 0).

When the torque saturation is eliminated in a direction in which the torque decreases from MVLV (T* < Tᵥ: transition condition C11), the torque advances on the LV curve while satisfying the command torque (LVCT). The curve intersects the ME curve (ME < 0: transition condition C3), and advances on the ME curve. Thus, the optimal efficiency control is implemented (MECT). The transition condition C11 is a condition in which the orthogonal coordinates (x, y) of LVCT are substituted into MV to be equal to or less than 0 (that is, MV < 0).

### [Scenario B]

In the direction in which the torque increases from 0, the torque advances on the LV curve with an intersection point of the y axis and the LV curve as a start point (LVCT). When the ME curve is inside the LV curve (|v| ≤ |vₘₐₓ|), the output changes to MECT. Thereafter, since the ME curve is outside the LV curve again (|v| ≥ |vₘₐₓ|: transition condition C1), the output becomes LVCT, and when the torque is saturated (T* ≥ Tᵥ: transition condition C4), the output is terminated at a point MVLV intersecting the MV curve.

When the torque saturation is eliminated in the direction in which the torque decreases from MVLV (T* < Tᵥ: transition condition C11), the torque advances on the LV curve while satisfying the command torque (LVCT). The curve intersects the ME curve (ME < 0: transition condition C3), and advances on the ME curve. Thus, the optimal efficiency control is implemented (MECT). However, the voltage of MECT is saturated again (|v| ≥ |vₘₐₓ|: transition condition C1), and the torque returns to LVCT.

### [Scenario C]

In the direction in which the torque increases from 0, the torque advances on the LV curve while satisfying the command torque (LVCT). When the torque is saturated (T* ≥ Tᵥ: transition condition C4), the torque is terminated at a point MVLV intersecting the MV curve.

When the torque saturation is eliminated in the direction in which the torque decreases from MVLV (T* < Tᵥ: transition condition C11), the torque advances on the LV curve while satisfying the command torque (LVCT).

### <Example 3 of state transition>

When the termination point is LVLA, there are the following two scenarios depending on which of the current and the voltage of MECT is saturated first.

### [Scenario in which current is saturated first]

In the direction in which the torque increases from 0, the torque advances on the ME curve while satisfying the command torque and the optimal efficiency (MECT). The curve intersects the LA curve and the current is saturated (|i| ≥ |iₘₐₓ|: transition condition C2). Subsequently, the torque advances on the LA curve while satisfying the command torque (LACT). The curve intersects the LV curve, the voltage and the torque are saturated (T* ≥ Tva: transition condition C8), and the torque is terminated at LVLA. The torque maximum point is LVLA, and the torque does not satisfy the command torque. The transition condition C8 is a condition in which the orthogonal coordinates (x, y) of LACT are substituted into LV to be equal to or less than vₘₐₓ² (that is, voltage saturation).

When the torque saturation is eliminated in a direction in which the torque decreases from LVLA, since (T* < Tva and ω ≤ ω_{MELVA}: transition condition C14) is satisfied, the torque advances on the LA curve while satisfying the command torque (LACT). When the curve intersects the ME curve (ME > 0: transition condition C6), the curve advances on the ME curve, and thus, the optimal efficiency control is implemented (MECT).

### [Scenario in which voltage is saturated first]

When the torque increases from 0, the torque advances on the ME curve while satisfying the command torque and the optimal efficiency (MECT). The curve intersects the LV curve and the voltage is saturated (|v| ≥ |vₘₐₓ|: transition condition C1). Subsequently, the torque advances on the LV curve while satisfying the command torque (LVCT). The curve intersects the LA curve, the voltage and the torque are saturated (T* ≥ Tva: transition condition C5), and are terminated at LVLA. The torque maximum point is LVLA, and the torque does not satisfy the command torque. The transition condition C5 is a condition in which the orthogonal coordinates (x, y) of LVCT are substituted into LA to be equal to or greater than iₘₐₓ² (that is, current saturation).

When the torque saturation is eliminated in the direction in which the torque decreases from LVLA, since (T* < Tva and ω > ω_{MELVA}: transition condition C13) is satisfied, the torque advances on the LV curve while satisfying the command torque (LVCT). When the curve intersects the ME curve (ME < 0: transition condition C3), the torque advances on the ME curve, and thus, the optimal efficiency control is implemented (MECT).

For the transition conditions C13 and C14, a sign obtained by substituting the orthogonal coordinates (x, y) of LVLA for ME may be used instead of ω_{MELVA}, and the transition to LVCT may be performed when ME > 0, and the transition to LACT may be performed when ME ≤ 0.

### <Example 4 of state transition>

### [Transition of MVLV ↔ LVLA]

When the current is saturated at MVLV in a state where the torque is terminated at a point MVLV (|i| ≥ |iₘₐₓ|: transition condition C12), the current output transitions to LVLA. Similarly, when a phase of LVLA advances more than a phase of the MV curve (ω > ω_{MVLVA}: transition condition C16) in a state where the torque is terminated at the point LVLA, the current output transitions to MVLV. The transition condition C16 is a condition in which the orthogonal coordinates (x, y) of LVLA are substituted into MV to be equal to or greater than 0 (that is, MV > 0). The transition condition C12 may be ω ≤ ω_{MVLVA} obtained by inverting the transition condition C16.

### <Example 5 of state transition>

### [Transition of MALA ↔ LVLA]

When the voltage is saturated at MALA (|v| ≥ |vₘₐₓ|: transition condition C10) in a state where the torque is terminated at the point MALA, the current output transitions to LVLA. Similarly, when the phase of LVLA is delayed from the phase of the MA curve (ω < ω_{MALVA}: transition condition C15) in a state where the torque is terminated at the point LVLA, the current output transitions to MALA. The transition condition C15 is a condition in which the orthogonal coordinates (x, y) of LVLA are substituted into MA to be equal to or less than 0 (that is, MA < 0). The transition condition C10 may be ω ≥ ω_{MALVA} obtained by inverting the transition condition C15.

### <Example 6 of state transition>

### [NOVA transition]

A state NOVA where the voltage limited ellipse (LV) and the current limited circle (LA) have no intersection point transitions with the LVLA by using a speed ω_{NOVA} as the transition condition (transition conditions C17 and C18). Since this current output is not a point satisfying both the current and the voltage, the following two strategies are conceivable.

(i) Point on the y axis where overcurrent protection is given priority and the voltage absolute value is minimized (y = iₘₐₓ)
(ii) Point on the y axis where overvoltage protection is given priority and the current absolute value is minimized (Equation (9) which is a solution of the following Equation (8) obtained by substituting x = 0 into the LV curve)
   [Math. 8] $\left(1+{{η}_{min}}^{2}{ω}^{2}\right) {y}^{2} - 2 {ξ}_{m} {η}_{min} {ω}^{2} y + {ξ}_{m} {ω}^{2} - {{v}_{max}}^{2} = 0$
   [Math. 9] $y = \frac{{ξ}_{m} {η}_{min} {ω}^{2} - \sqrt{{{v}_{max}}^{2} \left(1+{{η}_{min}}^{2}{ω}^{2}\right) - {ξ}_{m} {ω}^{2}}}{1 + {{η}_{min}}^{2} {ω}^{2}}$

As described above, when the command current of the motor is determined under the voltage and current limits, the motor control device according to the present embodiment determines the transition destination based on the positional relationship between the curves on a current vector plane by using the state transition table in which the transition conditions from the current states to the transition destination states are set, and at this time, calculates a command value of a current vector focusing on an intersection point of two curves, which is effective as the current command (current output) for the motor. Thus, the calculation amount of the current command value for the motor can be reduced, and improvement in a processing speed and reduction in the cost can be achieved.

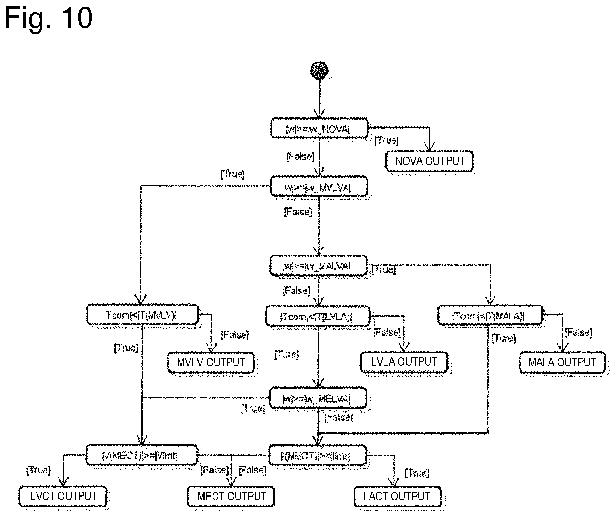

That is, since the method for selecting and calculating the current command value as described above avoids processing without the transition condition to which the x mark is given in the state transition table illustrated in FIG. 6 from the beginning, the processing speed is greatly improved as compared with, for example, processing of determining whether or not all the intersection points are appropriate as in the flowchart illustrated in FIG. 10 (that is, of determining the condition to which the x mark is given in the state transition table every time). The present invention is a method for calculating the current command value that is compatible with all synchronous machines regardless of the presence or absence of the magnet, the surface permanent magnet motor (SPM), and the internal permanent magnet motor (IPM).

In FIG. 10, |Tcom| is an absolute value of a command torque, |W| is an absolute value of a current rotational speed, Vlmt is a voltage limit value, Ilmt is a current limit value, V(MECT) is an MECT intersection point voltage, I(MECT) is an MECT intersection point current, T(MVLV) is an MVLV intersection point torque, T(MALA) is an MALA intersection point torque, T(LVLA) is an LVLA intersection point torque, w_MALVA is a triple intersection point speed of MA, LV, and LA, w_MVLVA is a triple intersection point speed of MV, LV, and LA, and w_NOVA is a speed equal to or greater than |w_MALVA| where there is no point satisfying both the voltage limited ellipse and the current limited circle.

According to the present embodiment, a state that does not satisfy both the current condition and the voltage condition is incorporated into the state transition table, and, thus, it is possible to avoid unnecessary calculation under a condition in which there is no solution. Accordingly, it is possible to stabilize control by preventing a failure in calculation of the intersection point coordinates for the current command.

In other words, in the selection of the current command value, a state in which there is no outputtable range is considered, and thus, it is possible to avoid a failure in current control by reliably excluding a state in which there is no intersection point of the curves.

Even though parameters such as a voltage limit value, a current limit value, a resistance value, an inductance, and an interlinkage magnetic flux fluctuate, since the state transitions to an appropriate state by implementing state transition calculation each time, there is no omission, leakage, calculation failure, and the like. For example, maximum efficiency control can be performed even for a motor having severe magnetic saturation and voltage fluctuation such as a motor for driving an electric vehicle.

It is possible to perform the maximum efficiency control corresponding to the optimization including not only a copper loss but also an iron loss which is the sum of a hysteresis loss and an eddy current loss. As a result, it is possible to reduce a processing load of an actual machine by reducing the man-hour as compared with control for creating an efficiency map in the related art.

The present invention is not limited to the above-described embodiment, and various modifications are possible.

### <Modification 1>

In the motor control device according to the above-described embodiment, although the combinations effective as the current commands are the six combinations illustrated in FIG. 5, the combinations are not limited thereto when the iron loss of the motor is not considered.

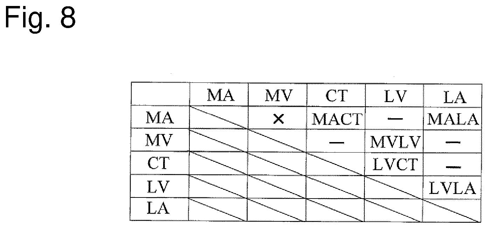

For example, it is also possible to substitute the ME curve with the MA curve in order to minimize the copper loss. In this case, there are 10 combinations for selecting two curves from five curves excluding ME. Three combinations are excluded under the above-described conditions, and LACT is not used to maintain the minimum current. As a result, the combinations effective as the current outputs are limited to five combinations of MACT, LVCT, MVLV, MALA, and LVLA illustrated in FIG. 8.

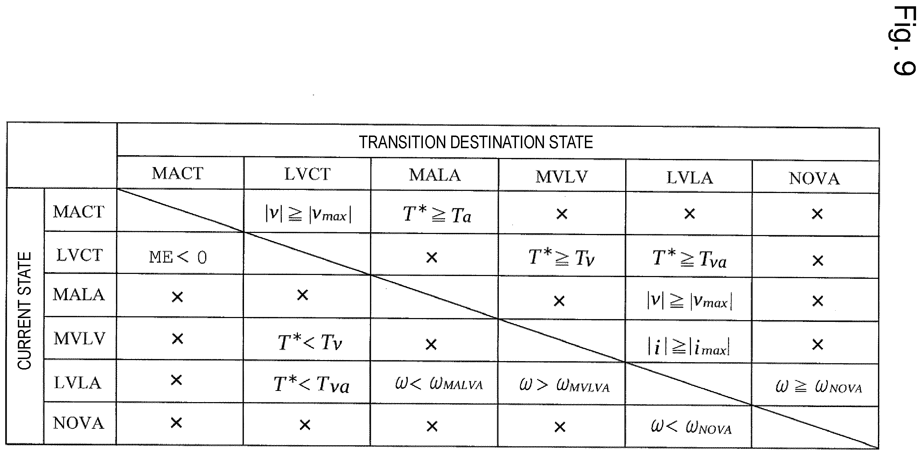

FIG. 9 is a state transition table in which the above-described five cases are regarded as the states and six states obtained by adding NOVA which is a case where there is no outputtable range in the combination are arrayed as current states and transition destination states. The state transition table of FIG. 9 is suitable, for example, for selection of a current command value necessary for control of a low-speed and large-current motor.

### <Modification 2>

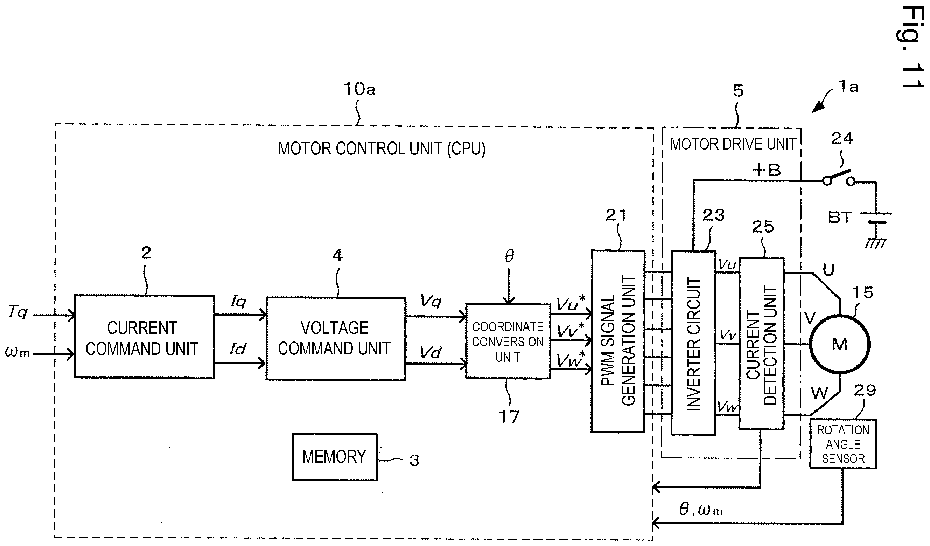

The motor control device according to the embodiment of the present invention is not limited to the configuration illustrated in FIG. 1. In the motor control device illustrated in FIG. 1, although the feedback control is performed such that the target value and the current detection value match each other, for example, feedforward control (F/F control) in which the current detection value is not compared with the target value is performed may be employed as in a motor control device 1a illustrated in FIG. 11.

The motor control device 1a performs feedforward control based on a motor voltage equation. Accordingly, a voltage command unit 4 of a motor control unit 10a calculates a d-axis voltage command value Vd and a q-axis voltage command value Vq by the following voltage Equation (10) from a d-axis current command value Id and a q-axis current command value Iq generated by a current command unit 2.
[Math. 10] $\left[\begin{matrix}{v}_{d} \\ {v}_{q}\end{matrix}\right] = \left[\begin{matrix}R + {pL}_{d} & - {ωL}_{q} \\ {ωL}_{d} & R + {pL}_{q}\end{matrix}\right] \left[\begin{matrix}{i}_{d} \\ {i}_{q}\end{matrix}\right] + \left[\begin{matrix}0 \\ {ωΨ}_{a}\end{matrix}\right]$

In Equation (10), Ld is a d-axis inductance of a motor, Lq is a q-axis inductance of the motor, R is an electric resistance (winding resistance) of a stator coil, Φa is an interlinkage magnetic flux of the motor, and ω is an electric angular velocity. These parameters are prepared by preliminary measurement or detection and estimation during driving. p is a differential operator.

### REFERENCE SIGNS LIST

- 1, 1a: motor control device
- 2: central control unit (CPU)
- 3: memory
- 4: voltage command unit
- 5: motor drive unit
- 10, 10a: motor control unit
- 15: electric motor
- 16a: q-axis PI control unit
- 16b: d-axis PI control unit
- 17, 28: coordinate conversion unit
- 21: PWM signal generation unit
- 23: inverter circuit
- 24: power supply relay
- 25: current detection unit
- 27: analog-to-digital conversion unit (ADC)
- 29: rotation angle sensor
- BT: external battery

## Claims

1. A motor control device (1; 1a) that drives a motor (15) by a current vector control in a dq-axis orthogonal coordinate system, the device comprising:
means for obtaining combinations of intersection points effective as current commands among intersection points of two curves selected from a maximum efficiency curve (ME), a current minimum curve (MA), a voltage minimum curve (MV), a current limited circle (LA), a voltage limited ellipse (LV), and a constant torque curve (CT) in a dq-axis orthogonal coordinate plane;
means for arraying the combinations of the intersection points as current states and transition destination states in a row direction and a column direction, respectively, and creating a state transition table in which transition conditions (C1 to C18) from the current states to the transition destination states are set; and
means for generating a current command value for the motor (15) based on a positional relationship between intersection points on the curves corresponding to the transition destination state when a transition from any intersection point corresponding to the current state is performed according to the transition condition.

2. The motor control device (1; 1a) according to claim 1, wherein the state transition table includes a state where there are no intersection points effective as the current state and the transition destination state for the curve.

3. The motor control device (1; 1a) according to claim 2, further comprising:
protection means for applying at least one or both of overcurrent protection and overvoltage protection to the motor (15) when there are no effective intersection points.

4. The motor control device (1; 1a) according to claim 1, wherein the state transition table includes
a first transition in which intersection point coordinates of the maximum efficiency curve (ME) and the constant torque curve (CT) are set as the current state and intersection point coordinates of the current limited circle (LA) and the constant torque curve (CT) are set as the transition destination state with a predetermined current saturation as the transition condition,
a second transition in which intersection point coordinates of the current limited circle (LA) and the constant torque curve (CT) are set as the current state and intersection point coordinates of the current minimum curve (MA) and the current limited circle (LA) are set as the transition destination state with a predetermined torque saturation as the transition condition,
a third transition in which intersection point coordinates of the current minimum curve (MA) and the current limited circle (LA) are set as the current state and intersection point coordinates of the current limited circle (LA) and the constant torque curve (CT) are set as the transition destination state with the fact that a predetermined torque saturation is eliminated as the transition condition, and
a fourth transition in which intersection point coordinates of the current limited circle (LA) and the constant torque curve (CT) are set as the current state and intersection point coordinates of the maximum efficiency curve (ME) and the constant torque curve (CT) are set as the transition destination state with a state of intersecting the maximum efficiency curve (ME) as the transition condition.

5. The motor control device (1; 1a) according to claim 1, wherein the state transition table includes
a fifth transition in which intersection point coordinates of the maximum efficiency curve (ME) and the constant torque curve (CT) are set as the current state and intersection point coordinates of the voltage limited ellipse (LV) and the constant torque curve (CT) with a predetermined voltage saturation as the transition condition,
a sixth transition in which intersection point coordinates of the voltage limited ellipse (LV) and the constant torque curve (CT) are set as the current state and intersection point coordinates of the voltage minimum curve (MV) and the voltage limited ellipse (LV) are set as the transition destination state with a predetermined torque saturation as the transition condition,
a seventh transition in which intersection point coordinates of the voltage minimum curve (MV) and the voltage limited ellipse (LV) are set as the current state and intersection point coordinates of the voltage limited ellipse (LV) and the constant torque curve (CT) are set as the transition destination state with the fact that a predetermined torque saturation is eliminated as the transition condition, and
an eighth transition in which intersection point coordinates of the voltage limited ellipse (LV) and the constant torque curve (CT) are set as the current state and intersection point coordinates of the maximum efficiency curve (ME) and the constant torque curve (CT) are set as the transition destination state with a state of intersecting the maximum efficiency curve (ME) as the transition condition.

6. The motor control device (1; 1a) according to claim 1, wherein the state transition table includes
a ninth transition in which intersection point coordinates of the maximum efficiency curve (ME) and the constant torque curve (CT) are set as the current state and intersection point coordinates of the current limited circle (LA) and the constant torque curve (CT) are set as the transition destination state with a predetermined current saturation as the transition condition,
a tenth transition in which intersection point coordinates of the current limited circle (LA) and the constant torque curve (CT) are set as the current state and intersection point coordinates of the voltage limited ellipse (LV) and the current limited circle (LA) are set as the transition destination state with a predetermined torque saturation as the transition condition,
an eleventh transition in which intersection point coordinates of the voltage limited ellipse (LV) and the current limited circle (LA) are set as the current state and intersection point coordinates of the current limited circle (LA) and the constant torque curve (CT) are set as the transition destination state with the fact that a predetermined torque saturation is eliminated and the number of revolutions is satisfied as the transition condition, and
a twelfth transition in which intersection point coordinates of the current limited circle (LA) and the constant torque curve (CT) are set as the current state and intersection point coordinates of the maximum efficiency curve (ME) and the constant torque curve (CT) are set as the transition destination state with a state of intersecting the maximum efficiency curve (ME) as the transition condition.

7. The motor control device (1; 1a) according to claim 1, wherein the state transition table includes
a thirteenth transition in which intersection point coordinates of the maximum efficiency curve (ME) and the constant torque curve (CT) are set as the current state and intersection point coordinates of the voltage limited ellipse (LV) and the constant torque curve (CT) are set as the transition destination state with a predetermined voltage saturation as the transition condition,
a fourteenth transition in which intersection point coordinates of the voltage limited ellipse (LV) and the constant torque curve (CT) are set as the current state and intersection point coordinates of the voltage limited ellipse (LV) and the current limited circle (LA) are set as the transition destination state with a predetermined torque saturation as the transition condition,
a fifteenth transition in which intersection point coordinates of the voltage limited ellipse (LV) and the current limited circle (LA) are set as the current state and intersection point coordinates of the voltage limited ellipse (LV) and the constant torque curve (CT) are set as the transition destination state with the fact that a predetermined torque saturation is eliminated and the number of revolutions is satisfied as the transition condition, and
a sixteenth transition in which intersection point coordinates of the voltage limited ellipse (LV) and the constant torque curve (CT) are set as the current state and intersection point coordinates of the maximum efficiency curve (ME) and the constant torque curve (CT) are set as the transition destination state with a state of intersecting the maximum efficiency curve (ME) as the transition condition.

8. The motor control device (1; 1a) according to claim 1, wherein the state transition table includes
a seventeenth transition in which intersection point coordinates of the voltage minimum curve (MV) and the voltage limited ellipse (LV) are set as the current state and intersection point coordinates of the voltage limited ellipse (LV) and the current limited circle (LA) are set as the transition destination state with a predetermined current saturation as the transition condition, and
an eighteenth transition in which intersection point coordinates of the voltage limited ellipse (LV) and the current limited circle (LA) are set as the current state and intersection point coordinates of the voltage minimum curve (MV) and the voltage limited ellipse (LV) are set as the transition destination state with the fact that a phase of the intersection point advances more than a phase of the voltage minimum curve (MV) as the transition condition.

9. The motor control device (1; 1a) according to claim 1, wherein the state transition table includes
a nineteenth transition in which intersection point coordinates of the current minimum curve (MA) and the current limited circle (LA) are set as the current state and intersection point coordinates of the voltage limited ellipse (LV) and the current limited circle (LA) are set as the transition destination state with a predetermined voltage saturation as the transition condition, and
a twentieth transition in which intersection point coordinates of the voltage limited ellipse (LV) and the current limited circle (LA) are set as the current state and intersection point coordinates of the current minimum curve (MA) and the current limited circle (LA) are set as the transition destination state with the fact that a phase of the intersection point is delayed from a phase of the current minimum curve (MA) as the transition condition.

10. The motor control device (1; 1a) according to claim 2, wherein the state transition table includes
a twenty-first transition in which a state where the voltage limited ellipse (LV) and the current limited circle (LA) do not have an intersection point is set as the current state and intersection point coordinates of the voltage limited ellipse (LV) and the current limited circle (LA) are set as the transition destination state with the fact that a predetermined number of revolutions is satisfied as the transition condition, and
a twenty-second transition in which intersection point coordinates of the voltage limited ellipse (LV) and the current limited circle (LA) are set as the current state and the state where the voltage limited ellipse (LV) and the current limited circle (LA) do not have an intersection point is set as the transition destination state with the fact that a predetermined number of revolutions is satisfied as the transition condition.

11. The motor control device (1; 1a) according to any one of claims 1 to 10, wherein the maximum efficiency curve is a quadratic curve described by using an iron loss of the motor (15).

12. A motor control method for driving a motor (15) by a current vector control in a dq axis orthogonal coordinate system, the method comprising:
obtaining combinations of intersection points effective as current commands among intersection points of two curves selected from a maximum efficiency curve (ME), a current minimum curve (MA), a voltage minimum curve (MV), a current limited circle (LA), a voltage limited ellipse (LV), and a constant torque curve (CT) in a dq-axis orthogonal coordinate plane;
arraying the combinations of the intersection points as current states and transition destination states in a row direction and a column direction, respectively, and creating a state transition table in which transition conditions (C1 to C18) from the current states to the transition destination states are set; and
generating a current command value for the motor (15) based on a positional relationship between intersection points on the curves corresponding to the transition destination state when a transition from any intersection point corresponding to the current state is performed according to the transition condition.

## Patentansprüche

1. Eine Motorsteuervorrichtung (1; 1a), die einen Motor (15) mittels einer Stromvektorsteuerung in einem dq-Achsen-orthogonalen Koordinatensystem ansteuert, wobei die Vorrichtung umfasst:
Mittel zum Ermitteln von Kombinationen von Schnittpunkten, die als Strombefehle wirken, aus den Schnittpunkten zweier Kurven, die aus einer Kurve für maximalen Wirkungsgrad (ME), einer Kurve für minimalen Strom (MA), einer Kurve für minimale Spannung (MV), einem strombegrenzten Kreis (LA), einer spannungsbegrenzten Ellipse (LV) und einer Kurve für konstantes Drehmoment (CT) in einer dq-Achsen-orthogonalen Koordinatenebene ausgewählt werden;
Mittel zum Anordnen der Kombinationen der Schnittpunkte als Stromzustände bzw. Übergangsziele in einer Zeilenrichtung und einer Spaltenrichtung sowie zum Erstellen einer Zustandsübergangstabelle, in der Übergangsbedingungen (C1 bis C18) von den Stromzuständen zu den Übergangszielen festgelegt sind; und
Mittel zum Erzeugen eines Strombefehlswerts für den Motor (15) auf der Grundlage einer Positionsbeziehung zwischen Schnittpunkten auf den Kurven, die dem Übergangszielzustand entsprechen, wenn ein Übergang von einem beliebigen, dem aktuellen Zustand entsprechenden Schnittpunkt gemäß der Übergangsbedingung durchgeführt wird.

2. Die Motorsteuervorrichtung (1; 1a) nach Anspruch 1, wobei die Zustandsübergangstabelle einen Zustand enthält, bei dem es keine Schnittpunkte gibt, die als aktueller Zustand und als Zielzustand für die Kurve wirksam sind.

3. Die Motorsteuervorrichtung (1; 1a) nach Anspruch 2, ferner umfassend:
Schutzmittel zum Anwenden mindestens eines oder beider aus Überstromschutz und Überspannungsschutz auf den Motor (15), wenn keine wirksamen Schnittpunkte vorhanden sind.

4. Die Motorsteuervorrichtung (1; 1a) nach Anspruch 1, wobei die Zustandsübergangstabelle Folgendes umfasst:
einen ersten Übergang, bei dem Schnittpunktkoordinaten der Kurve für maximalen Wirkungsgrad (ME) und der Kurve für konstantes Drehmoment (CT) als aktueller Zustand festgelegt werden und Schnittpunktkoordinaten des strombegrenzten Kreises (LA) und der Kurve für konstantes Drehmoment (CT) als Zielzustand des Übergangs festgelegt werden, wobei eine vorbestimmte Stromsättigung als Übergangsbedingung gilt,
einen zweiten Übergang, bei dem die Schnittpunktkoordinaten des strombegrenzten Kreises (LA) und der Kurve für konstantes Drehmoment (CT) als aktueller Zustand festgelegt werden und die Schnittpunktkoordinaten der Kurve für minimalen Strom (MA) und des strombegrenzten Kreises (LA) als Zielzustand des Übergangs festgelegt werden, wobei eine vorbestimmte Drehmomentsättigung als Übergangsbedingung gilt,
einen dritten Übergang, bei dem die Schnittpunktkoordinaten der Kurve für minimalen Strom (MA) und des strombegrenzten Kreises (LA) als aktueller Zustand festgelegt werden und die Schnittpunktkoordinaten des strombegrenzten Kreises (LA) und der Kurve für konstantes Drehmoment (CT) als Zielzustand des Übergangs festgelegt werden, wobei eine vorgegebene Drehmomentsättigung als Übergangsbedingung aufgehoben wird, und
ein vierter Übergang, bei dem die Schnittpunktkoordinaten des strombegrenzten Kreises (LA) und der Kurve für konstantes Drehmoment (CT) als aktueller Zustand festgelegt werden und die Schnittpunktkoordinaten der Kurve für maximalen Wirkungsgrad (ME) und der Kurve für konstantes Drehmoment (CT) als Zielzustand des Übergangs festgelegt werden, wobei der Schnittpunkt mit der Kurve für maximalen Wirkungsgrad (ME) als Übergangsbedingung dient.

5. Die Motorsteuervorrichtung (1; 1a) nach Anspruch 1, wobei die Zustandsübergangstabelle umfasst:
einen fünften Übergang, bei dem die Schnittpunktkoordinaten der Kurve für maximalen Wirkungsgrad (ME) und der Kurve für konstantes Drehmoment (CT) als aktueller Zustand festgelegt werden und die Schnittpunktkoordinaten der spannungsbegrenzten Ellipse (LV) und der Kurve für konstantes Drehmoment (CT) mit einer vorgegebenen Spannungssättigung als Übergangsbedingung festgelegt werden,
einen sechsten Übergang, bei dem die Schnittpunktkoordinaten der spannungsbegrenzten Ellipse (LV) und der Kurve für konstantes Drehmoment (CT) als aktueller Zustand und die Schnittpunktkoordinaten der Kurve für minimale Spannung (MV) und der spannungsbegrenzten Ellipse (LV) als Zielzustand des Übergangs festgelegt werden, wobei eine vorbestimmte Drehmomentsättigung als Übergangsbedingung dient,
einen siebten Übergang, bei dem die Schnittpunktkoordinaten der Kurve für minimale Spannung (MV) und der spannungsbegrenzten Ellipse (LV) als aktueller Zustand festgelegt werden und die Schnittpunktkoordinaten der spannungsbegrenzten Ellipse (LV) und der Kurve für konstantes Drehmoment (CT) als Zielzustand des Übergangs festgelegt werden, wobei eine vorgegebene Drehmomentsättigung als Übergangsbedingung aufgehoben wird, und
ein achter Übergang, bei dem die Schnittpunktkoordinaten der spannungsbegrenzten Ellipse (LV) und der Kurve für konstantes Drehmoment (CT) als aktueller Zustand festgelegt werden und die Schnittpunktkoordinaten der Kurve für maximalen Wirkungsgrad (ME) und der Kurve für konstantes Drehmoment (CT) als Zielzustand des Übergangs festgelegt werden, wobei der Schnittpunkt mit der Kurve für maximalen Wirkungsgrad (ME) als Übergangsbedingung dient.

6. Die Motorsteuervorrichtung (1; 1a) nach Anspruch 1, wobei die Zustandsübergangstabelle Folgendes umfasst:
einen neunten Übergang, bei dem die Schnittpunktkoordinaten der Kurve für maximalen Wirkungsgrad (ME) und der Kurve für konstantes Drehmoment (CT) als aktueller Zustand festgelegt werden und die Schnittpunktkoordinaten des strombegrenzten Kreises (LA) und der Kurve für konstantes Drehmoments (CT) als Zielzustand des Übergangs festgelegt werden, wobei eine vorbestimmte Stromsättigung als Übergangsbedingung gilt,
einen zehnten Übergang, bei dem die Schnittpunktkoordinaten des strombegrenzten Kreises (LA) und der Kurve für konstantes Drehmoment (CT) als aktueller Zustand festgelegt werden und die Schnittpunktkoordinaten der spannungsbegrenzten Ellipse (LV) und des strombegrenzten Kreises (LA) als Zielzustand des Übergangs festgelegt werden, wobei eine vorbestimmte Drehmomentsättigung als Übergangsbedingung gilt,
ein elfter Übergang, bei dem die Schnittpunktkoordinaten der spannungsbegrenzten Ellipse (LV) und des strombegrenzten Kreises (LA) als aktueller Zustand festgelegt werden und die Schnittpunktkoordinaten des strombegrenzten Kreises (LA) und der Kurve für konstantes Drehmoment (CT) als Zielzustand des Übergangs festgelegt werden, wobei eine vorgegebene Drehmomentsättigung beseitigt ist und die Drehzahl als Übergangsbedingung erfüllt ist, und
ein zwölfter Übergang, bei dem die Schnittpunktkoordinaten des strombegrenzten Kreises (LA) und der Kurve für konstantes Drehmoment (CT) als aktueller Zustand festgelegt werden und die Schnittpunktkoordinaten der Kurve für maximalen Wirkungsgrad (ME) und der Kurve für konstantes Drehmoment (CT) als Zielzustand des Übergangs festgelegt werden, wobei als Übergangsbedingung der Schnittpunkt mit der Kurve für maximalen Wirkungsgrad (ME) gilt.

7. Die Motorsteuervorrichtung (1; 1a) nach Anspruch 1, wobei die Zustandsübergangstabelle umfasst:
einen dreizehnten Übergang, bei dem die Schnittpunktkoordinaten der Kurve für maximalen Wirkungsgrad (ME) und der Kurve für konstantes Drehmoment (CT) als aktueller Zustand festgelegt werden und die Schnittpunktkoordinaten der spannungsbegrenzten Ellipse (LV) und der Kurve für konstantes Drehmoment (CT) als Zielzustand des Übergangs festgelegt werden, wobei eine vorbestimmte Spannungssättigung als Übergangsbedingung gilt,
einen vierzehnten Übergang, bei dem die Schnittpunktkoordinaten der spannungsbegrenzten Ellipse (LV) und der Kurve für konstantes Drehmoment (CT) als aktueller Zustand festgelegt werden und die Schnittpunktkoordinaten der spannungsbegrenzten Ellipse (LV) und des strombegrenzten Kreises (LA) als Zielzustand des Übergangs festgelegt werden, wobei eine vorbestimmte Drehmomentsättigung als Übergangsbedingung gilt,
ein fünfzehnter Übergang, bei dem die Schnittpunktkoordinaten der spannungsbegrenzten Ellipse (LV) und des strombegrenzten Kreises (LA) als aktueller Zustand festgelegt werden und die Schnittpunktkoordinaten der spannungsbegrenzten Ellipse (LV) und der Kurve für konstantes Drehmoment (CT) als Zielzustand des Übergangs festgelegt werden, wobei eine vorgegebene Drehmomentsättigung beseitigt ist und die Drehzahl als Übergangsbedingung erfüllt ist, und
ein sechzehnter Übergang, bei dem die Schnittpunktkoordinaten der spannungsbegrenzten Ellipse (LV) und der Kurve für konstantes Drehmoment (CT) als aktueller Zustand festgelegt werden und die Schnittpunktkoordinaten der Kurve für maximalen Wirkungsgrad (ME) und der Kurve für konstantes Drehmoment (CT) als Zielzustand des Übergangs festgelegt werden, wobei als Übergangsbedingung der Schnittpunkt mit der Kurve für maximalen Wirkungsgrad (ME) gilt.

8. Die Motorsteuervorrichtung (1; 1a) nach Anspruch 1, wobei die Zustandsübergangstabelle umfasst:
einen siebzehnten Übergang, bei dem die Schnittpunktkoordinaten der Kurve für minimale Spannung (MV) und der spannungsbegrenzten Ellipse (LV) als aktueller Zustand festgelegt werden und die Schnittpunktkoordinaten der spannungsbegrenzten Ellipse (LV) und des strombegrenzten Kreises (LA) als Zielzustand des Übergangs festgelegt werden, wobei eine vorbestimmte Stromsättigung als Übergangsbedingung gilt, und
einen achtzehnten Übergang, bei dem die Schnittpunktkoordinaten der spannungsbegrenzten Ellipse (LV) und des strombegrenzten Kreises (LA) als aktueller Zustand festgelegt werden und die Schnittpunktkoordinaten der Kurve für minimale Spannung (MV) und der spannungsbegrenzten Ellipse (LV) als Zielzustand des Übergangs festgelegt werden, wobei als Übergangsbedingung gilt, dass die Phase des Schnittpunkts um mehr als die Phase der Kurve für minimale Spannung (MV) vorauseilt.

9. Die Motorsteuervorrichtung (1; 1a) nach Anspruch 1, wobei die Zustandsübergangstabelle umfasst:
einen neunzehnten Übergang, bei dem die Schnittpunktkoordinaten der Kurve für minimalen Strom (MA) und des strombegrenzten Kreises (LA) als aktueller Zustand festgelegt werden und die Schnittpunktkoordinaten der spannungsbegrenzten Ellipse (LV) und des strombegrenzten Kreises (LA) als Zielzustand des Übergangs festgelegt werden, wobei eine vorbestimmte Spannungssättigung als Übergangsbedingung gilt, und
einen zwanzigsten Übergang, bei dem die Schnittpunktkoordinaten der spannungsbegrenzten Ellipse (LV) und des strombegrenzten Kreises (LA) als aktueller Zustand festgelegt werden und die Schnittpunktkoordinaten der Kurve für minimalen Strom (MA) und des strombegrenzten Kreises (LA) als Zielzustand des Übergangs festgelegt werden, wobei als Übergangsbedingung gilt, dass die Phase des Schnittpunkts gegenüber der Phase der Kurve für minimalen Strom (MA) verzögert ist.

10. Die Motorsteuervorrichtung (1; 1a) nach Anspruch 2, wobei die Zustandsübergangstabelle umfasst:
einen einundzwanzigsten Übergang, bei dem ein Zustand, in dem die spannungsbegrenzte Ellipse (LV) und der strombegrenzte Kreis (LA) keinen Schnittpunkt aufweisen, als aktueller Zustand festgelegt wird und die Schnittpunktkoordinaten der spannungsbegrenzten Ellipse (LV) und des strombegrenzten Kreises (LA) als Zielzustand des Übergangs festgelegt werden, wobei als Übergangsbedingung die Erfüllung einer vorgegebenen Anzahl von Umdrehungen gilt, und
einen einundzwanzigsten Übergang, bei dem die Koordinaten des Schnittpunkts der spannungsbegrenzten Ellipse (LV) und des strombegrenzten Kreises (LA) als aktueller Zustand festgelegt werden und der Zustand, in dem die spannungsbegrenzte Ellipse (LV) und der strombegrenzte Kreis (LA) keinen Schnittpunkt aufweisen, als Zielzustand des Übergangs festgelegt wird, wobei eine vorbestimmte Anzahl von Umdrehungen als Übergangsbedingung erfüllt ist.

11. Die Motorsteuervorrichtung (1; 1a) nach einem der Ansprüche 1 bis 10, wobei die Kurve für maximalen Wirkungsgrad eine quadratische Kurve ist, die unter Verwendung eines Eisenverlusts des Motors (15) beschrieben wird.

12. Ein Motorsteuerungsverfahren zum Antreiben eines Motors (15) mittels einer Stromvektorsteuerung in einem dq-Achsen-Orthogonal-Koordinatensystem, wobei das Verfahren umfasst:
das Ermitteln von Kombinationen von Schnittpunkten, die als Strombefehle dienen, aus den Schnittpunkten zweier Kurven, die aus einer Kurve für maximalen Wirkungsgrad (ME), einer Kurve für minimalen Strom (MA), einer Kurve für minimale Spannung (MV), einem strombegrenzten Kreis (LA), einer spannungsbegrenzten Ellipse (LV) und einer Kurve für konstantes Drehmoment (CT) in einer dq-Achsen-orthogonalen Koordinatenebene ausgewählt werden;
das Anordnen der Kombinationen der Schnittpunkte als aktuelle Zustände und Übergangsziele jeweils in einer Zeilenrichtung und einer Spaltenrichtung sowie Erstellen einer Zustandsübergangstabelle, in der Übergangsbedingungen (C1 bis C18) von den aktuellen Zuständen zu den Übergangszielen festgelegt sind; und
das Erzeugen eines Strombefehlswerts für den Motor (15) auf der Grundlage einer Positionsbeziehung zwischen Schnittpunkten auf den Kurven, die dem Übergangszielzustand entsprechen, wenn ein Übergang von einem beliebigen, dem aktuellen Zustand entsprechenden Schnittpunkt gemäß der Übergangsbedingung durchgeführt wird.

## Revendications

1. Dispositif de commande de moteur (1 ; 1a) qui entraîne un moteur (15) par une commande vectorielle d'intensité dans un système de coordonnées orthogonales d'axes dq, le dispositif comprenant :
un moyen pour obtenir des combinaisons de points d'intersection efficaces en tant que commandes d'intensité parmi les points d'intersection de deux courbes choisies parmi une courbe de rendement maximal (ME), une courbe d'intensité minimale (MA), une courbe de tension minimale (MV), un cercle de limitation d'intensité (LA), une ellipse de limitation de tension (LV) et une courbe de couple constant (CT) dans un plan de coordonnées orthogonales d'axes dq,
un moyen pour disposer les combinaisons de points d'intersection en tant qu'états d'intensité et états de destination de transition respectivement dans une direction de rangée et une direction de colonne, et pour créer un tableau de transition d'états dans lequel sont définies des conditions de transition (C1 à C18) des états d'intensité aux états de destination de transition, et
un moyen pour générer une valeur de commande d'intensité pour le moteur (15) en fonction d'une relation de position entre les points d'intersection sur les courbes correspondant à l'état de destination de transition lorsqu'une transition à partir de tout point d'intersection correspondant à l'état d'intensité est réalisée selon la condition de transition.

2. Dispositif de commande de moteur (1 ; 1a) selon la revendication 1, dans lequel le tableau de transition d'états comprend un état dans lequel il n'existe aucun point d'intersection efficace en tant qu'état d'intensité et état de destination de transition pour la courbe.

3. Dispositif de commande de moteur (1 ; 1a) selon la revendication 2, comprenant en outre :
un moyen de protection pour appliquer au moteur (15) une protection contre les surintensités et/ou une protection contre les surtensions lorsqu'il n'existe aucun point d'intersection efficace.

4. Dispositif de commande de moteur (1 ; 1a) selon la revendication 1, dans lequel le tableau de transition d'états comprend
une première transition dans laquelle les coordonnées du point d'intersection de la courbe de rendement maximal (ME) et de la courbe de couple constant (CT) sont définies en tant qu'état d'intensité, et les coordonnées du point d'intersection du cercle de limitation d'intensité (LA) et de la courbe de couple constant (CT) sont définis en tant qu'état de destination de transition, la condition de transition étant une saturation d'intensité prédéterminée,
une deuxième transition dans laquelle les coordonnées du point d'intersection du cercle de limitation d'intensité (LA) et de la courbe de couple constant (CT) sont définies en tant qu'état d'intensité, et les coordonnées du point d'intersection de la courbe d'intensité minimale (MA) et du cercle de limitation d'intensité (LA) sont définies en tant qu'état de destination de transition, la condition de transition étant une saturation de couple prédéterminée,
une troisième transition dans laquelle les coordonnées du point d'intersection de la courbe d'intensité minimale (MA) et du cercle de limitation d'intensité (LA) sont définies en tant qu'état d'intensité, et les coordonnées du point d'intersection du cercle de limitation d'intensité (LA) et de la courbe de couple constant (CT) sont définies en tant qu'état de destination de transition, la condition de transition étant le fait qu'une saturation de couple prédéterminée est éliminée, et
une quatrième transition dans laquelle les coordonnées du point d'intersection du cercle de limitation d'intensité (LA) et de la courbe de couple constant (CT) sont définies en tant qu'état d'intensité, et les coordonnées du point d'intersection de la courbe de rendement maximal (ME) et de la courbe de couple constant (CT) sont définies en tant qu'état de destination de transition, la condition de transition étant l'état d'intersection de la courbe de rendement maximal (ME).

5. Dispositif de commande de moteur (1 ; 1a) selon la revendication 1, dans lequel le tableau de transition d'états comprend
une cinquième transition dans laquelle les coordonnées du point d'intersection de la courbe de rendement maximal (ME) et de la courbe de couple constant (CT) sont définies en tant qu'état d'intensité, et les coordonnées du point d'intersection de l'ellipse de limitation de tension (LV) et de la courbe de couple constant (CT), la condition de transition étant une saturation d'intensité prédéterminée,
une sixième transition dans laquelle les coordonnées du point d'intersection de l'ellipse de limitation de tension (LV) et de la courbe de couple constant (CT) sont définies en tant qu'état d'intensité, et les coordonnées du point d'intersection de la courbe de tension minimale (MV) et de l'ellipse de limitation de tension (LV) sont définies en tant qu'état de destination de transition, la condition de transition étant une saturation de couple prédéterminée,
une septième transition dans laquelle les coordonnées du point d'intersection de la courbe de tension minimale (MV) et de l'ellipse de limitation de tension (LV) sont définies en tant qu'état d'intensité, et les coordonnées du point d'intersection de l'ellipse de limitation de tension (LV) et de la courbe de couple constant (CT) sont définies en tant qu'état de destination de transition, la condition de transition étant le fait qu'une saturation de couple prédéterminée est éliminée, et
une huitième transition dans laquelle les coordonnées du point d'intersection de l'ellipse de limitation de tension (LV) et de la courbe de couple constant (CT) sont définies en tant qu'état d'intensité, et les coordonnées du point d'intersection de la courbe de rendement maximal (ME) et de la courbe de couple constant (CT) sont définies en tant qu'état de destination de transition, la condition de transition étant l'état d'intersection de la courbe de rendement maximal (ME).

6. Dispositif de commande de moteur (1 ; 1a) selon la revendication 1, dans lequel le tableau de transition d'états comprend
une neuvième transition dans laquelle les coordonnées du point d'intersection de la courbe de rendement maximal (ME) et de la courbe de couple constant (CT) sont définies en tant qu'état d'intensité, et les coordonnées du point d'intersection du cercle de limitation d'intensité (LA) et de la courbe de couple constant (CT) sont définies en tant qu'état de destination de transition, la condition de transition étant une saturation d'intensité prédéterminée,
une dixième transition dans laquelle les coordonnées du point d'intersection du cercle de limitation d'intensité (LA) et de la courbe de couple constant (CT) sont définies en tant qu'état d'intensité, et les coordonnées du point d'intersection de l'ellipse de limitation de tension (LV) et du cercle de limitation d'intensité (LA) sont définies en tant qu'état de destination de transition, la condition de transition étant une saturation de couple prédéterminée,
une onzième transition dans laquelle les coordonnées du point d'intersection de l'ellipse de limitation de tension (LV) et du cercle de limitation d'intensité (LA) sont définies en tant qu'état d'intensité, et les coordonnées du point d'intersection du cercle de limitation d'intensité (LA) et de la courbe de couple constant (CT) sont définies en tant qu'état de destination de transition, la condition de transition étant le fait qu'une saturation de couple prédéterminée est éliminée et que le nombre de tours est atteint, et
une douzième transition dans laquelle les coordonnées du point d'intersection du cercle de limitation d'intensité (LA) et de la courbe de couple constant (CT) sont définies en tant qu'état d'intensité, et les coordonnées du point d'intersection de la courbe de rendement maximal (ME) et de la courbe de couple constant (CT) sont définies en tant qu'état de destination de transition, la condition de transition étant l'état d'intersection de la courbe de rendement maximal (ME).

7. Dispositif de commande de moteur (1 ; 1a) selon la revendication 1, dans lequel le tableau de transition d'états comprend
une treizième transition dans laquelle les coordonnées du point d'intersection de la courbe de rendement maximal (ME) et de la courbe de couple constant (CT) sont définies en tant qu'état d'intensité, et les coordonnées du point d'intersection de l'ellipse de limitation de tension (LV) et de la courbe de couple constant (CT) sont définies en tant qu'état de destination de transition, la condition de transition étant une saturation de tension prédéterminée,
une quatorzième transition dans laquelle les coordonnées du point d'intersection de l'ellipse de limitation de tension (LV) et de la courbe de couple constant (CT) sont définies en tant qu'état d'intensité, et les coordonnées du point d'intersection de l'ellipse de limitation de tension (LV) et du cercle de limitation d'intensité (LA) sont définies en tant qu'état de destination de transition, la condition de transition étant une saturation de couple prédéterminée,
une quinzième transition dans laquelle les coordonnées du point d'intersection de l'ellipse de limitation de tension (LV) et du cercle de limitation d'intensité (LA) sont définies en tant qu'état d'intensité, et les coordonnées du point d'intersection de l'ellipse de limitation de tension (LV) et de la courbe de couple constant (CT) sont définies en tant qu'état de destination de transition, la condition de transition étant qu'une saturation de couple prédéterminée est éliminée et que le nombre de révolutions est atteint, et
une seizième transition dans laquelle les coordonnées du point d'intersection de l'ellipse de limitation de tension (LV) et de la courbe de couple constant (CT) sont définies en tant qu'état d'intensité, et les coordonnées du point d'intersection de la courbe de rendement maximal (ME) et de la courbe de couple constant (CT) sont définies en tant qu'état de destination de transition, la condition de transition étant l'état d'intersection de la courbe de rendement maximal (ME).

8. Dispositif de commande de moteur (1 ; 1a) selon la revendication 1, dans lequel le tableau de transition d'états comprend
une dix-septième transition dans laquelle les coordonnées du point d'intersection d'une courbe de tension minimale (MV) et de l'ellipse de limitation de tension (LV) sont définies en tant qu'état d'intensité, et les coordonnées du point d'intersection de l'ellipse de limitation de tension (LV) et du cercle de limitation d'intensité (LA) sont définies en tant qu'état de destination de transition, la condition de transition étant une saturation d'intensité prédéterminée, et
une dix-huitième transition dans laquelle les coordonnées du point d'intersection de l'ellipse de limitation de tension (LV) et du cercle de limitation d'intensité (LA) sont définies en tant qu'état d'intensité, et les coordonnées du point d'intersection de la courbe de tension minimale (MV) et de l'ellipse de limitation de tension (LV) sont définies en tant qu'état de destination de transition, la condition de transition étant le fait qu'une phase du point d'intersection est en avance de plus d'une phase par rapport à la courbe de tension minimale (MV).

9. Dispositif de commande de moteur (1 ; 1a) selon la revendication 1, dans lequel le tableau de transition d'états comprend
une dix-neuvième transition dans laquelle les coordonnées du point d'intersection de la courbe d'intensité minimale (MA) et du cercle de limitation d'intensité (LA) sont définies en tant qu'état d'intensité, et les coordonnées du point d'intersection de l'ellipse de limitation de tension (LV) et du cercle de limitation d'intensité (LA) sont définies en tant qu'état de destination de transition, la condition de transition étant une saturation de tension prédéterminée, et
une vingtième transition dans laquelle les coordonnées du point d'intersection de l'ellipse de limitation de tension (LV) et du cercle de limitation d'intensité (LA) sont définies en tant qu'état d'intensité, et les coordonnées du point d'intersection de la courbe d'intensité minimale (MA) et du cercle de limitation d'intensité (LA) sont définies en tant qu'état de destination de transition, la condition de transition étant le fait qu'une phase du point d'intersection est retardée d'une phase par rapport à la courbe d'intensité minimale (MA).

10. Dispositif de commande de moteur (1 ; 1a) selon la revendication 2, dans lequel le tableau de transition d'états comprend
une vingt-et-unième transition dans laquelle un état dans lequel l'ellipse de limitation de tension (LV) et le cercle de limitation d'intensité (LA) ne présentent pas de point d'intersection est défini en tant qu'état d'intensité, et les coordonnées du point d'intersection de l'ellipse de limitation de tension (LV) et du cercle de limitation d'intensité (LA) sont définies en tant qu'état de destination de transition, la condition de transition étant le fait qu'un nombre de tours prédéterminé est atteint, et
une vingt-deuxième transition dans laquelle les coordonnées du point d'intersection de l'ellipse de limitation de tension (LV) et du cercle de limitation d'intensité (LA) sont définies en tant qu'état d'intensité, et l'état dans lequel l'ellipse de limitation de tension (LV) et le cercle de limitation d'intensité (LA) ne présentent pas de point d'intersection est défini en tant qu'état de destination de transition, la condition de transition étant le fait qu'un nombre de tours prédéterminé est atteint.

11. Dispositif de commande de moteur (1 ; 1a) selon l'une quelconque des revendications 1 à 10, dans lequel la courbe de rendement maximal est une courbe quadratique décrite au moyen d'une perte dans le fer du moteur (15).

12. Procédé de commande de moteur pour le pilotage d'un moteur (15) par une commande vectorielle d'intensité dans un système de coordonnées orthogonales d'axes dq, le procédé comprenant :
l'obtention des combinaisons de points d'intersection efficaces en tant que commandes d'intensité parmi les points d'intersection de deux courbes choisies parmi une courbe de rendement maximal (ME), une courbe d'intensité minimale (MA), une courbe de tension minimale (MV), un cercle de limitation d'intensité (LA), une ellipse de limitation de tension (LV) et une courbe de couple constant (CT) dans un plan de coordonnées orthogonales d'axes dq,
la disposition des combinaisons de points d'intersection en tant qu'états d'intensité et états de destination de transition respectivement dans une direction de rangée et une direction de colonne, et la création d'un tableau de transition d'états dans lequel sont définies des conditions de transition (C1 à C18) des états d'intensité aux états de destination de transition, et
la génération d'une valeur de commande d'intensité pour le moteur (15) en fonction d'une relation de position entre les points d'intersection sur les courbes correspondant à l'état de destination de transition lorsqu'une transition à partir de tout point d'intersection correspondant à l'état d'intensité est réalisée selon la condition de transition.
